# EUROPÄISCHE PATENTSCHRIFT

(11) **EP 4 009 121 B1**
(45) Veröffentlichungstag und Bekanntmachung des Hinweises auf die Patenterteilung: **03.04.2024**
(21) Anmeldenummer: 20212183.6
(22) Anmeldetag: 07.12.2020
(51) Int. Cl.: G05B 19/042

(54) **VERFAHREN ZUR STEUERUNG EINER TECHNISCHEN VORRICHTUNG**
METHOD FOR CONTROLLING A TECHNICAL DEVICE
PROCÉDÉ DE COMMANDE D'UN DISPOSITIF TECHNIQUE

(43) Veröffentlichungstag der Anmeldung: 08.06.2022
(73) Patentinhaber: TTTech Auto AG, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- EP-A1- 3 285 163
- EP-A1- 3 287 902
- EP-A1- 3 323 687
- EP-A1- 3 557 356
- DE-T5-112018 002 176

## Beschreibung

Die Erfindung betrifft ein Verfahren zur Steuerung einer technischen Vorrichtung, z.B. einer technischen Anlage gemäß dem Oberbegriff des Anspruchs 1.

Weiters betrifft die Erfindung ein Echtzeitcomputersystem, insbesondere ein verteiltes Echtzeitcomputersystem, zur Steuerung einer technischen Vorrichtung, z.B. einer technischen Anlage, wie etwa einem Roboter oder einem Fahrzeug, insbesondere einem Kraftfahrzeug gemäß dem Oberbegriff des Anspruchs 9.

Die Erfindung liegt im Bereich der Computertechnik. Sie beschreibt ein ein Verfahren zum sicheren autonomen Betrieb einer technischen Vorrichtung, wie etwa einem Roboter oder einem Fahrzeug, insbesondere einem Kraftfahrzeug, und ein sicheres Automatisierungssystem bzw. eine Architektur eines solchen sicheren Automatisierungssystems. In der Literatur wir ein System, das aus einer technischen Vorrichtung und einem die Vorrichtung steuernden Echtzeitcomputersystem besteht, auch als *Cyber-Physical System (CPS)* bezeichnet.

Ein solches Verfahren bzw. Echtzeitcomputersystem sind in der EP 3 557 356 A1 beschrieben.

Der autonome Betrieb einer technischen Vorrichtung, z.B. einer technischen Anlage, wie etwa einem Roboter oder einem Fahrzeug, insbesondere einem Kraftfahrzeug, erfordert ein Echtzeitcomputersystem, das die Umwelt der technischen Vorrichtung, etwa der Anlage, mit Sensoren beobachtet, mittels eines auf dem Echtzeitcomputersystem laufenden Prozessmodells die Sensordaten auswertet und die errechneten Sollwerte den Aktoren übergibt, die den Ablauf der physikalischen Vorgänge beeinflussen. Die Beobachtung der Umwelt kann beispielsweise mit optischen Sensoren (Kamera), LIDAR, Radarsensoren sowie diversen anderen Sensoren erfolgen. Die Auswertung der Sensordaten, die Datenfusion der Sensordaten und die Erstellung von erforderlichen Umweltmodellen, sowie die Planung der Trajektorien, erfordern komplexe Softwarekomponenten mit Millionen von Befehlen.

In vielen Cyber-Physical Systemen, z.B. bei der autonomen Steuerung eines Fahrzeugs, kann ein auftretender Fehler im Echtzeitcomputersystem schwerwiegende Auswirkungen haben. Ein solcher Fehler kann durch einen transienten oder permanenten Ausfall der Hardware eines Subsystems oder durch einen Defekt in der Software (Entwurfsfehler) ausgelöst werden. In sicherheitskritischen Anwendungen wird gefordert, dass die Mean-Time to Fail (*MTTF*) eines katastrophalen Ausfalls auf Systemebene in der Größenordnung von 10⁸ bis 10⁹ Stunden betragen muss.

Ein Fehlverhalten des Systems kann aber auch durch eine *Intrusion* ausgelöst werden. Bei einer *Intrusion* (einem Einbruch in das System) umgeht ein *Intruder* (Einbrecher) die *Intrusion Detection Mechanismen* und übernimmt die volle Kontrolle über das System. Der Intruder kann dann einen byzantinischen Fehler des kompromittierten Subsystems produzieren. *"Als byzantinische Fehler bezeichnet man in der Informationstechnik Fehler, bei denen sich ein System beliebig falsch verhält"* [Wiklb]. Ein *byzantinischer Fehler* ist somit der bösartigste Fehler, der in einem System auftreten kann.

Die Architektur eines sicheres Echtzeitcomputersystem muss gewährleisten, dass jedmöglicher *byzantinische Fehler* in einem der komplexen Subsysteme des Echtzeitcomputersystems, gleichgültig ob er verusacht wurde durch ein zufälliges Versagen der Hardware, einem Entwurfsfehler in der Software oder eine Intrusion, erkannt und derart beherrscht wird, dass es zu keinem sicherheitsrelevanten Vorfall kommt.

Es ist eine Aufgabe der vorliegenden Erfindung, eine Lösung für dieses Problem anzugeben.

Diese Aufgabe wird mit einem eingangs genannten Verfahren, welches erfindungsgemäß die Merkmale des Kennzeichens des unabhängigen Anspruchs 1 aufweist, gelöst.

Weiters wird diese Aufgabe mit einem eingangs genannten Echtzeitcomputersystem gelöst, welches erfindungsgemäß die Merkmale des Kennzeichens des unabhängigen Anspruchs 9 aufweist, gelöst.

Der ISO Standard ISO 26262 über funktionale Sicherheit zur Entwicklung, Prüfung und Zertifizierung von Software in sicherheitsrelevanten Anwendungen der Automobilindustrie führt vier ASIL (*Automotive Safety Integrity Levels*) Sicherheitsstufen ein, ASIL A (geringste Sicherheitsstufe), ASIL B, ASIL C und ASIL D (höchste Sicherheitsstufe). ASIL D beschreibt einen sehr aufwendigen Softwareentwicklungsprozess der zu einer fehlerfreien Software führen soll. Die Erfahrungen der NASA haben gezeigt [Dvo09], dass es praktisch nicht möglich ist, alle in einem komplexen Softwaresystem, das ist ein System mit mehr als 10000 Befehlen, vorhandenen Entwurfsfehler zu eliminieren.

Wir bezeichnen deshalb ein Softwaresystem bzw. eine Software, das/die weniger als 10000 Befehle umfasst und nach ASIL D entwickelt wurde, um alle Entwurfsfehler zu eliminieren, als *einfaches Softwaresystem*/*einfache Software.* Es wird angenommen, dass ein nach ASIL D entwickeltes einfaches Softwaresystem/einfache Software frei von Entwurfsfehlern ist.

Wenn ein Softwaresystem bzw. eine Software kein einfaches Softwaresystem bzw. keine einfache Software ist, so bezeichnen wir es als ein *komplexes Softwaresystem bzw. als komplexe Software.* Ein komplexes Softwaresystem bzw. eine komplexe Software kann nicht erkannte Entwurfsfehler, z.B. auch byzantinische Fehler wie sie durch eine Intrusion ausgelöst werden, enthalten.

Erfindungsgemäß besteht das hier geoffenbarte Echtzeitcomputersystem aus mindestens vier weitgehend unabhängigen Subsystemen, die vorzugsweise hierarchisch angeordnet sind, und deren Entwurf diversitär ist, so dass die Subsysteme weitgehend unabhängig voneinander ausfallen und sich wechselseitig überprüfen können.

Der Begriff "weitgehend unabhängig" soll zum Ausdruck bringen, dass eine volle Unabhängigkeit den Ausschluss von *allen* Einflussfaktoren, die auf die Subsysteme gleichzeitig einwirken könnten, wie etwa Temperatur, Höhenstrahlung, die SEU (single event upsets) auslösen kann, Verzögerung bei einem Unfall, Stromversorgung etc., erfordern würde. Da die Realisierung von *total unabhängigen* Subsystemen technisch nicht möglich ist, wird der Begriff *weitgehend unabhängig* eingeführt.

Zwei redundante Softwaresysteme sind *diversitär,* wenn die gegebene Aufgabenstellung von unabhängigen Entwicklungsteams, mit unterschiedlichen Entwicklungswerkzeugen unter dem Einsatz von unterschiedlichen Algorithmen gelöst wird. Diversitäre Software minimiert die Wahrscheinlichkeit, dass in zwei redundanten Softwaresystemen ein Softwarefehler in beiden Systemen gleichzeitig auftritt [Avi85].

Wir bezeichnenen zwei redundante Subsysteme als diversitär, wenn zumindest die in den Subsystemenen zum Einsatz kommende Software diversitär ist. Ein höheres Mass an Diversität wird realisiert, wenn auch die eingesetzte Hardware unterschiedlich ist.

Weiters ist in der Architektur ein fünftes Subsystem, ein Zeitserver, vorhanden, das vorzugsweise außerhalb der Hierarchie steht, das periodisch Zeitsignale an die anderen Subsysteme sendet, um die Uhren der Subsysteme zu synchronisieren und eine globale Zeit aufrecht zu erhalten. Unter Verwendung dieser globalen Zeit wird die Zeitachse in eine Folge von synchronisierten Zeitscheiben unterteilt. Normalerweise wird am Beginn einer Zeitscheibe von einem Subsystem mit den vorhandenen Sensoren die Umgebung beobachtet. Während einer Zeitscheibe werden die vorgesehenen Berechnungen durchgeführt. Am Ende einer Zeitscheibe werden die Resultate der Berechnungen den anderen Subsystemen mittels Nachrichten zur Verfügung gestellt.

Vorzugsweise bildet ein Subsystem eine unabhängige *Fault-Containment Unit* (FCU), [Kopll, p.136-138]. Ein Subsystem ist eine FCU, wenn die unmittelbaren Folgen aller internen Fehlerursachen abkapselt sind und an der Oberfläche ein definiertes Fehlverhalten der Ausgabenachrichten gegeben ist. Durch die Abkapselung wird erreicht, dass zwei FCUs weitestgehend unabhängig voneinander ausfallen.

Es ist ein Entscheidungssubsystem (*Fault-Tolerant Decision Subsystem-FTDSS*) vorgesehen, welches sich vorzugsweise an der obersten Stelle der Hierarchie befindet. Das FTDSS beinhaltet eine einfache Software, die auf fehlertoleranter Hardware ausgeführt wird. Eine fehlertolerante Hardware, wie sie in [Kopll, p.155-157] beschrieben ist, maskiert einen in der Hardware auftretenden Fehler.

Vorzugsweise ist vorgesehen, um eine Intrusion in das FTDSS über das Internet zu verhindern, dass die FTDSS über keinen Zugang zum Internet verfügt. Da im FTDSS eine einfache Software auf einer fehlertoleranten Hardware ausgeführt wird, und wenn kein Zugang zum Internet verfügbar ist, kann angenommen werden, dass das FTDSS ein sicheres Subsystem ist, das korrekt funktioniert und eine geforderte Zuverlässigkeit von weniger als 10⁻⁸Ausfällen/Stunde erreicht. Der Nachweis einer so hohen Zuverlässigkeit erfordert eine rigorose Systementwicklung nach ASIL D mit der Unterstützung durch formale Methoden und wäre praktisch kaum durchführbar, wenn ein Softwaresystem komplex ist.

Weiters sind drei Subsysteme vorgesehen, welche sich vorzugsweise auf der nächsten Ebene der Hierarchie befinden:
- Ein Subsystem, das die technische Anlage, z.B. ein Fahrzeug, im *normalen Betrieb* steuert -das *Normal Processing Subsystem NPSS.* Der *normale Betrieb* liegt vor, wenn alle im Systementwurf des NPSS gemachten Annahmen über die Funktion des Echtzeitcomputersystems und dessen Umgebung erfüllt sind, d.i. die Mechanik der technischen Vorrichtung und das Umfeld, in dem sich die technische Vorrichtung befindet. Eine Verletzung einer dieser Annahmen bezeichnen wir als *kritisches Ereignis.* Ein kritisches Ereignis, das vom NPSS nicht beherrscht wird, führt zu einem *anormalen Betrieb.*
- Ein Subsystem, das im *anormalen Betrieb,* d.i. nach Auftreten eines Ereignisses, das vom NPSS nicht beherrscht wird, die Kontrolle über den Prozess (z.B. das Fahrzeug) übernimmt und den Prozess (das Fahrzeug) in einen sicheren Zustand führt - das sogenannte *Critical Event Handling Subsystem CEHSS,* und
- Ein *Monitor Subsystem,* d.i. ein Subsystem, das die Funktion des NPSS und CEHSS überwacht.

Jedes dieser drei Subsysteme ist abgekapselt und autonom und wertet die Sensordaten mit diversitärer Software aus. Da jedes dieser drei Subsysteme bzw. die Software, die auf diesen Subsystemen ausgeführt wird, weit mehr als 10000 Befehle umfasst, sind diese drei Subsysteme *komplex.* Es wird angenommen, dass ein komplexes Softwaresystem nach ASIL B entwickelt und validiert wird und im Betrieb die mittlere Zeit (MTTF) bis zum Auftreten eines Fehlers bei 10⁴ Stunden liegt.

Von der beschriebenen Architektur kann der schlimmste Fall, nämlich dass zu einem beliebigen Zeitpunkt ein byzantinischer Fehler in einem der komplexen Subsysteme auftritt, beherrscht werden. Ein solcher byzantinische Fehler - gleichgültig ob die Fehlerursache ein Hardwarefehler, ein Softwarefehler oder eine Intrusion ist - wird von der vorgeschlagenen Architektur erkannt und beherrscht, insbesondere da die komplexen Subsysteme Fault-Containment Units bilden.

Vorteilhafte Ausgestaltungen des erfindungsgemäßen Verfahrens und des erfindungsgemäßen Echtzeitcomputersystems sind in den abhängigen Ansprüchen angegeben. Insbesondere können die folgenden Merkmale, jedes für sich alleine oder in beliebiger Kombination bei dem erfindungsgemäßen Verfahrens und/oder bei erfindungsgemäßen Echtzeitcomputersystems realisiert sein:
- Das Monitor Subsystem, MSS, überprüft in jeder Zeitscheibe, ob der Satz von Sollwerten für den anormalen Betrieb, welchen es vom *Critical Event Handling Subsystem, CEHSS,* über das FTDSS, insbesondere mittels Nachrichten, erhält, mit dem Umweltmodell, das auf der Basis der Sensordaten des MSS vom MSS errechnet wurde, vereinbar ist und eine sichere Führung der technischen Vorrichtung im anomalen Betrieb gewährleistet, und falls dies der Fall ist, einen weiteren Korrektheitsindikator, den Korrektheitsindikator-2, auf den Wert TRUE setzt, und falls dies nicht der Fall ist oder wenn in einer Zeitscheibe kein Satz von Sollwerten für den anormalen Betrieb vom CEHSS empfangen wurde, den Korrektheitsindikator-2 auf den Wert FALSE setzt, und wobei das Monitor Subsystem, MSS, den Korrektheitsindikator-2 anschließend an das *Normal-Processing Subsystem, NPSS,* sendet, und wobei das *Normal-Processing Subsystem, NPSS,* in jeder Zeitscheibe überprüft, ob der vom Monitor Subsystem, MSS, erhaltene Korrektheitsindikator-2 den Wert FALSE einnimmt, und falls dies der Fall ist, die normale Führung der technischen Vorrichtung abbricht und die technische Vorrichtung in einen sicheren Zustand führt.
- Das *Normal-Processing Subsystem, NPSS,* übermittelt *in* jeder Zeitscheibe neben dem Satz von Sollwerten für den normalen Betrieb auch eine geplante Trajektorie für den *normalen Betrieb,* beispielsweise in der Nachricht, in welcher es den Satz von Sollwerten für den Normalbetrieb an das Monitor Subsystem, MSS, sendet.
- Der Zeitserver ist fehlertolerant.
- Die Datenverarbeitungssubsysteme sind *unsichere* Subsysteme, d.h. sie enthalten *komplexe Software,* die auf nicht fehlertoleranter Hardware ausgeführt wird.
- Die Datenverarbeitungssubsysteme enthalten eine diversitäre Software, beispielsweise zur Berechnung bzw. Überprüfung der Sollwerte für die Aktuatoren und/oder zur Berechung eines Umweltmodells bzw. von Umweltmodellen.
- Jedes der Datenverarbeitungssubsysteme verfügt über einen eigenen Satz von Sensoren.
- Jedes der Subsysteme verfügt über eine eigene Energieversorgung.

Im Folgenden ist die Erfindung an Hand der Zeichung beispielhaft näher erläutert. Es zeigt
- Fig. 1: einen Überblick über die Architektur des verteilten Echtzeitcomputersystems,
- Fig. 2: eine Realisierung einer Uhrensynchronisation mittels eines fehlertoleranten Zeitservers, und
- Fig. 3: eine Realisierung der Uhrensynchronisation mittels der Subsysteme des Echtzeitcomputersystems.

Im Folgenden erfolgt vorerst eine

### Erklärung von verwendeten Begriffen:

Im Folgenden sind wichtige in diesem Dokument verwendeten Begriffe erklärt:
- anormaler Betrieb: Der Betrieb eines →Cyber-physical Systems (CPS) (z.B. eines Kraftfahrzeugs) unter Bedingungen, die von der Spezifikation des CPS und dessen Umgebung abweichen.
- ASIL: *Automotive Safety Integrity Levels*-Sicherheitsstufen die im ISO Standard ISO 26262 beschrieben sind
- Byzantinischer Fehler: Als byzantinische Fehler bezeichnet man in der Informationstechnik Fehler, bei denen sich ein System beliebig falsch verhält [Wikib]
- Critical Event Handling Subsystem (CEHSS): Ein →Subsystem das im →anormalen Betrieb die Sollwerte für die Aktuatoren errechnet.
- Cyber-Physical System (CPS): Ein System, das eine technische Vorrichtung und ein die Vorrichtung steuerndes Echtzeitcomputersystem umfasst.
- diversitäre Software: Zwei Softwaresysteme sind *diversitär,* wenn die gegebene Aufgabenstellung von unabhängigen Entwicklungsteams, mit unterschiedlichen Entwicklungswerkzeugen unter dem Einsatz von unterschiedlichen Algorithmen gelöst wird. Diverse Software minimiert die Wahrscheinlichkeit, dass in zwei redundanten diversen Softwaresystemen ein Softwarefehler gleichzeitig auftritt.
- einfache Software: Software, die weniger als 10000 Befehle enthält und nach ASIL D entwickelt wurde, um alle Entwurfsfehler zu finden.
- Fail Silent FCU: Eine ->FCU, die im Fehlerfall keine Ausgabenachrichten produziert.
- Fault- Containment Unit (FCU): Ein →Subsystem, das die unmittelbaren Folgen aller internen Fehlerursachen abkapselt und an der Oberfläche ein definiertes Fehlverhalten der Ausgabenachrichten aufweist. Durch die Abkapselung wird erreicht, dass zwei FCUs weitestgehend unabhängig voneinander ausfallen. →Fail silent FCU.
- Fault-Tolerant Decision Subsystem (FTDSS): Ein →Subsystem das →einfache Software enthält, die auf einer fehlertoleranten Hardware ausgeführt wird und das entscheidet, welche Sollwerte an die Aktuatoren geliefert werden.
- komplexe Software: Software, die mehr als 10000 Befehle umfasst oder nicht nach ASIL D entwickelt wurde. In komplexer Software können Entwurfsfehler enthalten sein.
- Korrektheits- indikator: Eine Variable, die den Wert TRUE oder FALSE annehmen kann und die mitteilt, ob ein zu überprüfendes Ergebnis korrekt ist.
- kritisches Ereignis (critical event): Ein Ereignis, das den Übergang vom →normalen Betrieb zum →anormalen Betrieb auslöst.
- MTTF-Mean- Time to Fail: Mittlere Zeit bis zum Auftreten eines Ausfalls im Betrieb eines Systems.
- Monitor Subsystem (MSS): Ein →Subsystem, das überprüft, ob die Ausgabewerte des →Normal-Processing Subsystem (NPSS) und des →Critical Event Handling Subsystem (CEHSS) einen sicheren Betrieb gewährleisten.
- Normal- Processing Subsystem (NPSS): Ein →Subsystem, das im →normalen Betrieb die Sollwerte für die Aktuatoren errechnet.
- normaler Betrieb: Der Betrieb eines →*Cyber-physical Systems (CPS)* (z.B. eines Kraftfahrzeugs) unter den Bedingungen, die in der Spezifikation des CPS und dessen Umgebung enthalten sind.
- sicheres Subsystem: Ein → *Subsystem* in dem →*einfache Software* auf einer fehlertoleranten Hardware ausgeführt wird
- Subsystem: Ein Teilsystem eines verteilten Echtzeitcomputersystems eines ->CPSs. Ein Subsystem ist eine weitgehend abgeschlossene Einheit aus Hardware und Software, die aus den Eingabedaten und dem inneren Zustand des Subsystems Ausgabedaten und einen neuen inneren Zustand errechnet. Ein Subsystem kommuniziert mit anderen Subsystemen über den Austausch von Nachrichten.
- Trajektorie: Bahn oder Bewegungspfad eines Objekts
- unsicheres Subsystem: Ein -> Subsystem in dem ->komplexe Software ausgeführt wird oder nicht-fehlertolerante Hardware eingesetzt wird.

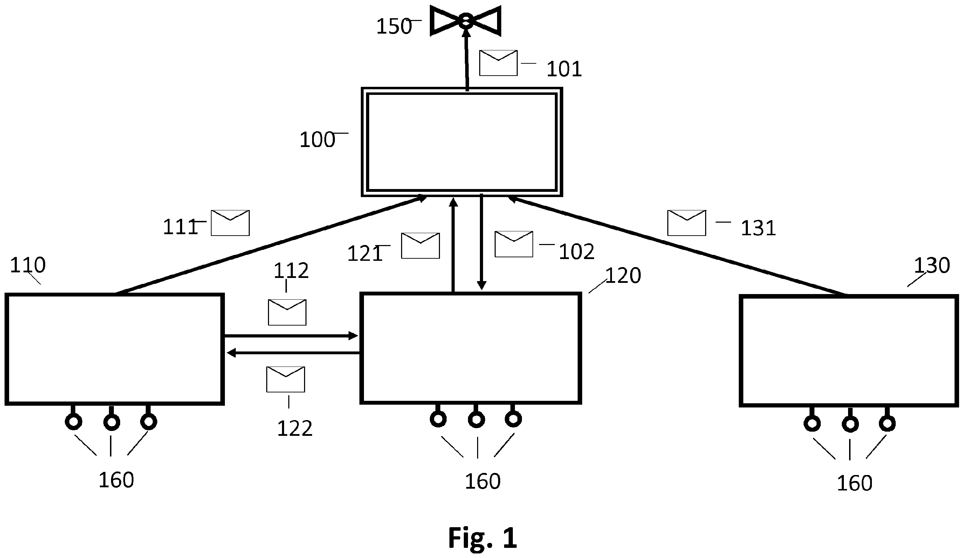

Fig. 1 zeigt die Struktur des verteilten Echtzeitcomputersystem zur Steuerung einer technischen Vorrichtung, z.B. einer technischen Anlage oder einer Maschine, wie etwa einem Roboter oder einem Fahrzeug, insbesondere einem Kraftfahrzeug.

Das Echtzeitcomputersystem umfasst, wie in Fig. 1 dargestellt, Subsysteme **100, 110, 120, 130,** wobei jedes Subsystem eine *Fault-Containment Unit* ist und die Subsysteme vorzugsweise in einer Hierarchie angeordnet sind. Weiters umfasst in diesem Beispiel das Echtzeitcomputersystem einen Zeitserver **210,** welcher außerhalb der gegebenenfalls realisierten Hierarchie steht.

In dem Echtzeitcomputersystem ist in bekannter Weise, bzw. mittels des Zeitservers **210,** eine globale Zeit realisiert, mittels welcher die Subsysteme **100, 110, 120, 130** zeitlich synchronisiert sind. Die Zeitachse ist in Zeitscheiben unterteilt, das sind Zeitabschnitte gleicher Dauer, die vorzugsweise unmittelbar aneinander anschließen,wobei über die globale Zeit diese Zeitscheiben für alle Subsysteme miteinander synchronisiert sind, sodass eine jeweils betrachtete Zeitscheibe für jedes der Subsysteme zum gleichen Zeitpunkt beginnt und endet.

Eines der Subsysteme, das sogenannte *Entscheidungssubsystem,* das *Fault-Tolerant Decision Subsystem* (FTDSS) **100,** welches vorzugsweise an der Spitze der Hierarchie steht, kann mittels einer Nachricht **101** in jeder Zeitscheibe Sollwerte an Aktuatoren **150** übergeben.

Weiters sind drei der Subsysteme als sogenannte Datenverarbeitungssubsysteme ausgebildet, welche sich vorzugsweise, in Bezug auf das FTDSS, auf der nächst niedrigeren Hierarchieebene befinden. Konkret handelt es sich bei diesen Datenverarbeitungssubsystemen um das *Normal-Processing Subsystem (NPSS)* **110,** das *Monitor Subsystem (MSS)* **120,** und das *Critical Event Handling Subsystem (CEHSS)* **130.** Diese drei Datenverarbeitungssubsysteme erfassen mit Sensoren **160** die Sensordaten einer Umgebung und werten diese Sensordaten unabhängig voneinander, vorzugsweise mit diversitärer, Software aus.

Das *Fault-Tolerant Decision Subsystem* (FTDSS) **100** ist ein sicheres Subsystem, d.h. es enthält eine einfache Software, die auf einer fehlertoleranten Hardware ausgeführt wird. Es wird angenommen, dass ein sicheres Subsystem die gegebenen Zuverlässigkeitsanforderungen, abhängig von der konkreten Anwendung, wie eingangs beschrieben erfüllt.

Die Datenverarbeitungssubsysteme **110, 120, 130** können *unsichere* Subsysteme sein, d.h. sie können *komplexe Software* enthalten, die auf nicht fehlertoleranter Hardware ausgeführt wird. Es wird angenommen, dass ein komplexes Softwaresystem nach ASIL B entwickelt und validiert wird und im Betrieb die mittlere Zeit (MTTF) bis zum Auftreten eines Fehlers bei 10⁴ Stunden liegt. Es kann nicht ausgeschlossen werden, dass in einem unsicheren Subsystem ein byzantinischer Fehler auftritt.

Das *Normal-Processing Subsystem (NPSS)* **110** beobachtet am Beginn jeder Zeitscheibe die Umgebung mit, vorzugsweise eigenen, Sensoren **160,** baut ein Umweltmodell auf und errechnet einen Satz von Sollwerten für die Aktoren **150** im normalen Betrieb. In einer Nachricht **111** werden die Sollwerte, die das Subsystem **110** errechnet hat, an das *Fault-Tolerant Decision Subsystem* (FTDSS) **100** und in einer Nachricht **112** an das Monitor Subsystem (MSS) **120** gesendet. Im Falle, dass das Subsystem **110** erkennt, dass die Annahmen über den normalen Betrieb verletzt worden sind, bricht es einen laufenden Prozess ab und führt die technische Vorrichtung in einen sicheren Zustand. Zusätzlich kann ein Operator, z.B. der Fahrer eines Kraffarzeuges darüber informiert werden und ggf. diesem die Kontrolle übergeben werden.

Das *Critical Event Handling Subsystem (CEHSS)* **130** beobachtet am Beginn jeder Zeitscheibe die Umgebung mit, vorzugsweise eigenen, Sensoren **160,** baut mit diversitärer Software ein eigenes Umweltmodell auf und errechnet einen Satz von Sollwerten für die Aktoren **150** im anormalen *Betrieb.* Es sendet diese Sollwerte in einer Nachricht **131** an das *Fault-Tolerant Decision Subsystem* (FTDSS) **100.**

Das *Fault-Tolerant Decision Subsystem* (FTDSS) **100** empfängt in jeder Zeitscheibe die Nachrichten **111, 131** mit den Sollwerten für den *normalen* und den *anomalen* Betrieb und sendet diese Sollwerte in einer Nachricht **102** an das *Monitor Subsystem (MSS)* **120.**

Das Monitor Subsystem (MSS) **120** überprüft in jeder Zeitscheibe, ob der Satz von Sollwerten für den normalen Betrieb, den es direkt vom *Normal-Processing Subsystem (NPSS)* **110** in der Nachricht **112** erhalten hat, mit einem Umweltmodell, das vom MSS **120** auf Basis von mit Sensoren **160** ermittelten Sensordaten mit diversitärer Software errechnet wurde, vereinbar ist und eine sichere Führung der technischen Vorrichtung unter normalen Bedingungen gewährleistet.

Ein Umweltmodell ist beispielsweise eine digitale Datenstruktur, die zu einem gegebenen Zeitpunkt ein Abbild der für die vorgegebene Aufgabe wesentlichen Charakteristika der Umwelt einer technischen Vorrichtung darstellt. Ein Beispiel für ein Umweltmodell ist die Beschreibung einer Straße und der zum gewählten Zeitpunkt auf der Straße befindlichen Objekte.

Das Monitor Subsystem (MSS) **120** überprüft ferner, ob der Satz von Sollwerten, den es vom *Normal-Processing Subsystem (NPSS)* **110** in der Nachricht **112** direkt erhält, identisch ist mit dem entsprechenden Satz von Sollwerten, der vom *Normal-Processing Subsystem (NPSS)* **110** über das *Fault-Tolerant Decision Subsystem* (FTDSS) **100** in der Nachricht **102** an das Monitor Subsystem (MSS) **120** gesendet wurde.

Diese zweite Überprüfung ist erforderlich, da folgender bösartiger byzantinischer Fehler des *Normal-Processing Subsystem (NPSS)* **110** erkannt werden muss: Ein fehlerhaftes *Normal-Processing Subsystem (NPSS)* **110** sendet *richtige Sollwerte* an das Monitor Subsystem (MSS) **120** und *fehlerhafte Sollwerte* an das *Fault-Tolerant Decision Subsystem* (FTDSS) **100.**

Falls beide Überprüfungen, die das Monitor Subsystem (MSS) **120** durchgeführt hat, positiv sind, wird der Korrektheitsindikator-1 auf den Wert TRUE gesetzt. Falls eine der beiden Überprüfungen negativ ist, wird der Korrektheitsindikator-1 auf den Wert FALSE gesetzt. Anschließend an die Überprüfung sendet das Monitor Subsystem (MSS) **120** den Korrektheitsindikator-1 in einer Nachricht **121** an das *Fault-Tolerant Decision Subsystem* (FTDSS) **100.**

Das *Fault-Tolerant Decision Subsystem* (FTDSS) **100** entscheidet in jeder Zeitscheibe wie folgt: Im Falle, dass der Korrektheitsindikator-1 den Wert TRUE enthält, wird der Satz von Sollwerten für den normalen Betrieb in der Nachricht **101** an die Aktuatoren **150** gesendet, im Falle, dass der Korrektheitsindikator-1 den Wert FALSE enthält oder dass die erwartete Nachricht **121** mit dem Korrektheitsindikator-1 ausbleibt, wird der Satz von Sollwerten für den anormalen Betrieb in der Nachricht **101** an die Aktuatoren **150** weitergeleitet, und ab diesem Zeitpunkt werden in den folgenden Zeitscheiben nur noch Sollwerte für den anormalen Betrieb an die Aktuatoren **150** weitergeleitet, bis die technische Vorrichtung in einem sicheren Zustand angekommen ist. Das Ausbleiben der erwarteten Nachricht **121** mit dem Korrektheitsindikator-1 ist ein Indikator für den fail-silent Ausfall des Monitor Subsystem (MSS) **120.**

Das *Fault-Tolerant Decision Subsystem* (FTDSS) **100** beinhaltet eine, insbesondere sehr, einfache Software, die ohne die Unterstützung von Betriebssystemen realisiert werden kann. Dies ist dahingehend von Vorteil, da erfahrungsgemäß Betriebssysteme komplex und nicht frei von Entwurfsfehlern sind [Cho01].

Das Monitor Subsystem (MSS) **120** muss in jeder Zeitscheibe auch überprüfen, ob der Satz von Sollwerten für den anormalen Betrieb, welches es vom *Critical Event Handling Subsystem (CEHSS)* **130** mittels der Nachrichten **131, 102** erhält, mit dem Umweltmodell, das auf der Basis der Sensordaten der Sensoren **160** des MSS vom MSS errechnet wurde, vereinbar ist und eine sichere Führung des Prozesses im anomalen Betrieb gewährleistet. Falls dies der Fall ist, wird vom Monitor Subsystem (MSS) **120** ein weiterer Korrektheitsindikator, der Korrektheitsindikator-2, auf den Wert TRUE gesetzt, und falls dies nicht der Fall ist, oder wenn vom MSS **120** in einer Zeitscheibe keine Nachricht vom CEHSS **130** empfangen wurde, wird der Korrektheitsindikator-2 auf den Wert FALSE gesetzt.

Die Übertragung der Sollwerte für den anormalen Betrieb über den Umweg mit den Nachrichten **131, 102** über das FTDSS **100** ist erforderlich, um einen byzantinischen Fehler des *Critical Event Handling Subsystem (CEHSS)* **130** auszuschließen.

Das Monitor Subsystem (MSS) **120** sendet den Wert des Korrektheitsindikator-2 bzw. den Korrektheitsindikator-2 an das *Normal-Processing Subsystem (NPSS)* **110** mit einer Nachricht **122,** sodass dem *Normal-Processing Subsystem (NPSS)* 110 mitgeteilt werden kann, ob im *Critical Event Handling Subsystem (CEHSS)* **130** ein Fehler aufgetreten ist oder dieses Subsystem durch einen fail-silent Fehler ausgefallen ist. Das *Normal-Processing Subsystem (NPSS)* **110** überprüft in jeder Zeitscheibe, ob der vom Monitor Subsystem (MSS) **120** erhaltene Korrektheitsindikator-2 den Wert FALSE einnimmt und falls dies der Fall ist, wird die technische Vorrichtung vom *Normal-Processing Subsystem (NPSS)* **110** in einen sicheren Zustand geführt.

Es ist vorteilhaft, wenn jedes der Datenverarbeitungssubsysteme **110, 120, 130** eine Analyse der Sensordaten, die Fusion der Sensordaten der Sensoren **160** und/oder die Festlegung von Trajektorien mittels diverser Software durchführt. Dadurch sinkt die Wahrscheinlichkeit, dass derselbe Softwarefehler in mehreren Subsystemen auftritt.

Eine Trajektorie ist beispielsweise ein Pfad, den die technische Vorrichtung im Laufe der Zeit ausführen kann um die vorgegebene Aufgabe zu erfüllen. Die Charakteristika der Trajektorien einer Vorrichtung hängen von der Konstruktion der Vorrichtung, der vorgegebenen Aufgabenstellung und den aktuellen Umweltbedingungen ab. Zum Beispiel bezeichnet man einen möglichen Weg, den ein Fahrzeug unter den gegebenen Umweltbedingungen ausführen kann um sein Ziel zu erreichen, alsTrajektorie.

Eine Trajektorie kann auch als die zeitliche Abfolge von Sollwerten beschrieben werden.

Es ist vorteilhaft, wenn jedes der Datenverarbeitungssubsysteme **110, 120, 130** über einen eigenen Satz von Sensoren **160** verfügt. Dadurch wird verhindert, dass ein Fehler in einem Sensor zu einem korrelierten Ausfall von mehreren Subsystemen führen kann.

Das *Normal-Processing Subsystem (NPSS)* **110** kann in jeder Zeitscheibe neben dem Satz von Sollwerten auch die geplante Trajektorie für den *normalen Betrieb* in der Nachricht **112** an das Monitor Subsystem (MSS) **120** senden, um dem Monitor Subsystem (MSS) **120** die Möglichkeit zu geben, die geplante Trajektorien zu überprüfen.

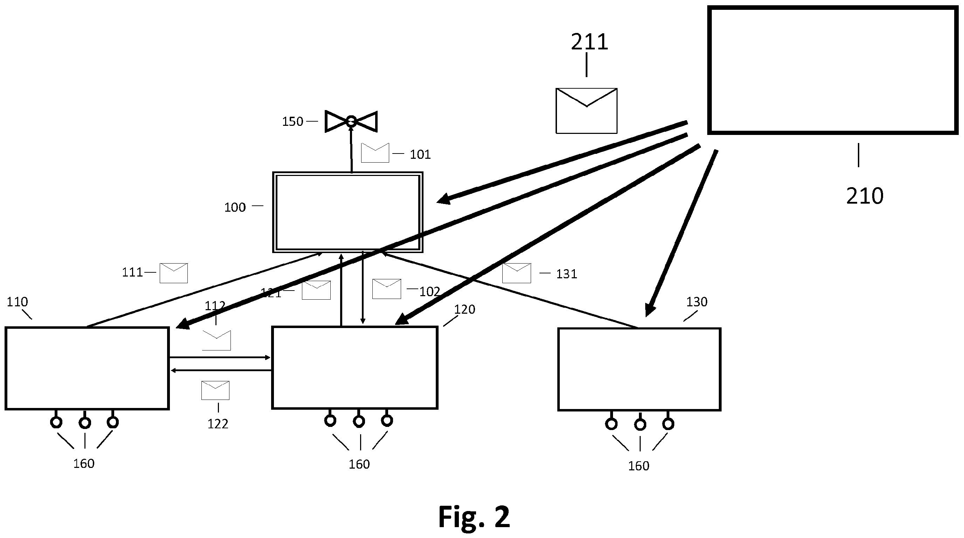

Fig. 2 zeigt einen Zeitserver **210,** wie er in einem Echtzeitcomputersystem aus Fig. 1 beispielhaft vorgesehen sein kann, der periodisch Synchronisationsnachrichten **211** an die Subsysteme **100, 110, 120, 130** zur Synchronisation der Uhren der Subsysteme sendet. Es ist vorteilhaft, wenn der Zeitserver **210** fehlertolerant ausgeführt ist.

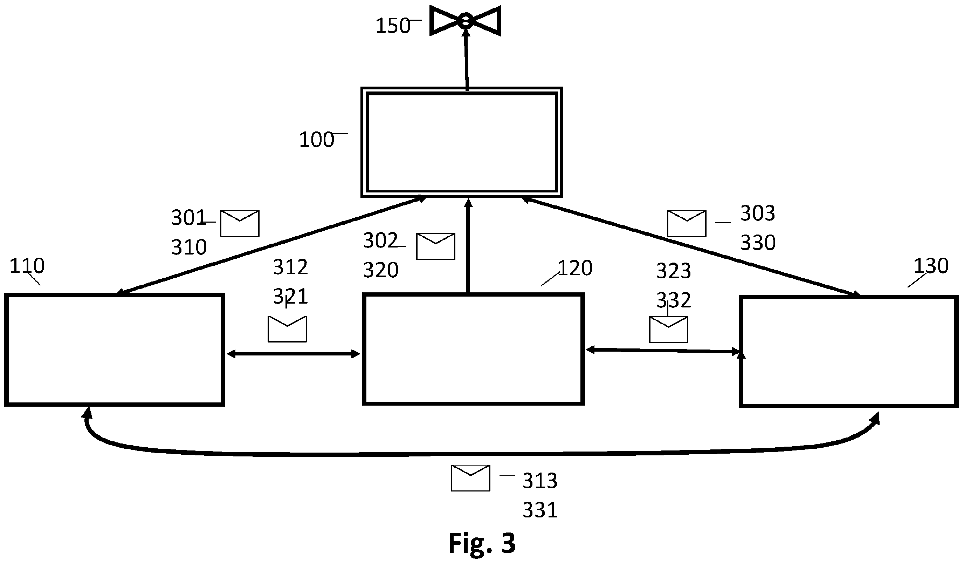

Da die vier Subsysteme **100, 110, 120, 130** autonome FCUs mit unabhängigen Oszillatoren/Uhren sind, ist es auch möglich, eine fehlertolerante Uhrensynchronisation zur Bildung einer globalen Zeit mittels diese vier Subsysteme selbst zu realisieren. Fig.3 zeigt den Nachrichtenaustausch, der erforderlich ist, um eine fehlertolerante Uhrensynchronisation, wie in [Kopll, Seite 69-74] beschrieben, mit den vier Subsysteme **100, 110, 120, 130** durchzuführen. Dazu müssen in jeder Synchronisationsperiode folgende Synchronisationsnachrichten ausgetauscht werden:
- Synchronisationsnachricht **301** vom Subsystem **100** zum Subsystem **110**
- Synchronisationsnachricht **310** vom Subsystem **110** zum Subsystem **100**
- Synchronisationsnachricht **302** von Subsystem **100** zum Subsystem **120**
- Synchronisationsnachricht **320** vom Subsystem **120** zum Subsystem **100**
- Synchronisationsnachricht **303** vom Subsystem **100** zum Subsystem **130**
- Synchronisationsnachricht **330** vom Subsystem **130** zum Subsystem **100**
- Synchronisationsnachricht **312** vom Subsystem **110** zum Subsystem **120**
- Synchronisationsnachricht **321** vom Subsystem **120** zum Subsystem **110**
- Synchronisationsnachricht **323** vom Subsystem **120** zum Subsystem **130**
- Synchronisationsnachricht **332** vom Subsystem **130** zum Subsystem **120**
- Synchronisationsnachricht **313** vom Subsystem **110** zum Subsystem **130**
- Synchronisationsnachricht **331** vom Subsystem **130** zum Subsystem **110**

Generell gilt, dass, um verhindern zu können, dass ein Ausfall einer zentralen Stromversorgung zu einem Ausfall aller Subsysteme **100, 110, 120, 130, 210** führt, es vorteilhaft ist, wenn jedes der Subsysteme **100, 110, 120, 130, 210** eine unabhängige Energieversorgung aufweist (z.B. durch eine eigene Batterie).

Der folgende Überblick zeigt abschließend, wie ein in einem Subsystem auftretender Fehler oder eine Intrusion erkannt und behandelt wird.

### Fehleranalyse

| **Fehlerhaftes Subsystem oder Intrusion in** | **Fehlererkennung** | **Fehlerbehandlung** |
|---|---|---|
| *Normal-Processing Subsystem* | Monitor Subsystem erkennt Fehler und meldet den Fehler an das Fault-Tolerant Decision System | Fault-Tolerant Decision System bringt die Anlage in einen sicheren Zustand |
| *Critical Event Handling Subsystem* | Monitor Subsystem erkennt Fehler und meldet den Fehler an das Normal-Processing Subsystem | Normal-Processing Subsystem bringt die Anlage in einen sicheren Zustand |
| Monitor Subsystem | Fault-Tolerant Decision Subsystem erkennt den Fehler | Fault-Tolerant Decision System bringt die Anlage in einen sicheren Zustand |
| *Fault-Tolerant Decision Subsystem* | keine Fehlererkennung vorgesehen, da einfache Software auf fehlertoleranter Hardware frei von Fehlern ist | keine Fehlerbehandlung vorgesehen |

### Zitierte Literatur:

[Avi85] Avizienis, A. The N-Version Approach to Fault-Tolerant Systems. IEEE Trans, on Software Engineering. Vol. 11, No 12, pp. 1491-1501. 1985.
[Cho01] Chou, A. et al. An Empirical Study of Operating System Errors. Proc. of the ACM SOPS 2001 pp. 73-88. 2001
ISO Standard ISO 26262 über funktionale Sicherheit.
[Dvo09] Dvorak, D.L. Editor. NASA Study on Flight Software Complexity. Final Report. Jet Propulsion Laboratory, Pasadena, Cal. USA. 2009.
[Kop11] Kopetz, H. Real-Time Systems-Design Principles for Distributed Embedded Applications. Springer Verlag. 2011
[Wiklb] Wikipedia, Definition von einem byzantinischen Fehler URL: https://de.wikipedia.org/wiki/Byzantinischer_Fehler

## Patentansprüche

1. Verfahren zur Steuerung einer technischen Vorrichtung, z.B. einer technischen Anlage, wie etwa einem Roboter oder einem Fahrzeug, insbesondere einem Kraftfahrzeug, mit einem verteilten Echtzeitcomputersystem, wobei das Echtzeitcomputersystem
- Subsysteme **(100, 110, 120, 130),** insbesondere eine Vielzahl von Subsystemen, umfasst, wobei beispielsweise die Subsysteme hierarchisch angeordnet sind,
- und wobei die Subsysteme über eine globale Zeit synchronisiert sind, beispielsweise indem ein Zeitserver **(210)** vorhanden ist, der vorzugsweise außerhalb der Hierarchie der Subsysteme steht, wobei der Zeitserver **(210)** periodisch Synchronisationsnachrichten **(211)** an jedes Subsystem, etwa an die Uhren jedes Subsystems, zur Synchronisation der Subsysteme bzw. der Uhren der Subsysteme zum Aufbau der globalen Zeit sendet, und wobei
- unter Verwendung dieser globalen Zeit die Zeitachse in eine Folge von synchronisierten Zeitscheiben unterteilt wird, wobei
- jedes Subsystem **(100, 110, 120, 130),** und falls vorhanden der Zeitserver **(210),** jeweils eine eigene Fault-Containment Unit bilden, und wobei
- eines der Subsysteme ein Entscheidungssubsystem, das sogenannte *Fault-Tolerant Decision Subsystem,* FTDSS, **(100),** ist, welches vorzugsweise in der höchsten Ebene der Hierarchie platziert ist, wobei das FTDSS **(100)** mittels Nachrichten **(101)** in jeder Zeitscheibe Sollwerte an Aktuatoren **(150)** übergeben kann, wobei das *Fault-Tolerant Decision Subsystem,* FTDSS, **(100)** ein sicheres Subsystem ist, d.h. einfache Software enthält, die auf einer fehlertoleranten Hardware ausgeführt wird, und wobei
- mindestens oder genau drei *Datenverarbeitungssubsysteme,* ein *Normal-Processing Subsystem, NPSS,* (**110**), ein *Monitor Subsystem, MSS,* (**120**), und ein *Critical Event Handling Subsystem, CEHSS,* (**130**), vorgesehen sind, welche vorzugsweise auf der nächst niedrigeren Hierarchieebene platziert sind, wobei diese zumindest oder genau drei Datenverarbeitungssubsysteme mit Sensoren **(160)** Sensordaten einer Umgebung, die mit den Sensoren **(160)** beobachtet wird, erfassen und diese Sensordaten unabhängig voneinander auswerten, wobei
- die Umgebung jeweils am Beginn einer Zeitscheibe von den Datenverarbeitungssubsystemen (**110, 120, 130**) beobachtet wird und während dieser Zeitscheibe Berechnungen mit den durch die zu Beginn der Zeitscheibe durchgeführten Beobachtungem der Umgebung gewonnenen Sensordaten durchgeführt werden,
- das *Normal-Processing Subsystem, NPSS,* **(110)** in jeder Zeitscheibe, vorzugsweise am Ende der Zeitscheibe, einen Satz von Sollwerten für einen *normalen Betrieb* in einer Nachricht **(111)** an das *Fault-Tolerant Decision Subsystem,* FTDSS, (**100**) sendet, und wobei
- das *Critical Event Handling Subsystem, CEHSS,* (**130**) in jeder Zeitscheibe, vorzugsweise am Ende der Zeitscheibe, einen Satz von Sollwerten für einen *anormalen Betrieb* in einer Nachricht (**131**) an das *Fault-Tolerant Decision Subsystem,* FTDSS, (**100**) sendet, **dadurch gekennzeichnet, dass**
- das *Normal-Processing Subsystem, NPSS,* (**110**) in jeder Zeitscheibe, vorzugsweise am Ende der Zeitscheibe, einen Satz von Sollwerten für einen *normalen Betrieb* in einer Nachricht (**112**) an das Monitor-Subsystem, MSS, (**120**) sendet,
- das *Fault-Tolerant Decision Subsystem,* FTDSS, (**100**) die beiden empfangenen Sätze von Sollwerten für den normalen Betrieb und den anomalen Betrieb in jeder Zeitscheibe, vorzugsweise am Ende der Zeitscheibe, in einer Nachricht (**102**) an das *Monitor Subsystem, MSS,* (**120**) sendet, und wobei
- das Monitor Subsystem, MSS, (**120**) in jeder Zeitscheibe eine Überprüfung durchführt, ob der Satz von Sollwerten für den normalen Betrieb, den es vom *Normal-Processing Subsystem, NPSS,* (**110**) in der Nachricht (**112**) erhalten hat, mit einem Umweltmodell, das vom MSS (**120**) auf der Basis der Sensordaten (**160**) des MSS (**120**) errechnet wurde, vereinbar ist und eine sichere Führung der technischen Vorrichtung unter normalen Bedingungen gewährleistet und weiters das Monitor Subsystem, MSS, (**120**) in jeder Zeitscheibe eine Überprüfung durchführt, ob der Satz von Sollwerten für den normalen Betrieb, den es vom *Normal-Processing Subsystem, NPSS,* (**110**) in der Nachricht (**112**) erhalten hat, identisch ist mit dem entsprechenden Satz von Sollwerten, die vom *Normal-Processing Subsystem, NPSS,* (**110**) über das *Fault-Tolerant Decision Subsystem,* FTDSS, (**100**) an das Monitor Subsystem, MSS, (**120**) gesendet wurden, und
- falls beide Überprüfungen positiv sind, einen Korrektheitsindikator, Korrektheitsindikator-1, auf den Wert TRUE setzt und, falls eine der beiden Überprüfungen negativ ist oder beide Überprüfungen negativ sind, den Korrektheitsindikator-1 auf den Wert FALSE setzt und den Korrektheitsindikator-1 bzw. den Wert des Korrektheitsindikator-1 in jeder Zeitscheibe in einer Nachricht **(121)** an das *Fault-Tolerant Decision Subsystem,* FTDSS, **(100)** sendet, und wobei
- das *Fault-Tolerant Decision Subsystem,* FTDSS, **(100)** in jeder Zeitscheibe wie folgt entscheidet: im Falle, dass der Korrektheitsindikator-1 den Wert TRUE aufweist, wird der Satz von Sollwerten für den normalen Betrieb, etwa in Nachrichten **(101),** an die Aktuatoren **(150)** übergeben, im Falle, dass der Korrektheitsindikator-1 den Wert FALSE aufweist oder eine von dem FTDSS **(100)** erwartete Nachricht **(121)** mit dem Korrektheitsindikator-1 ausbleibt, wird der Satz von Sollwerten für den anormalen Betrieb, etwa in Nachrichten **(101),** an die Aktuatoren **(150)** weitergeleitet, wobei in diesem Fall ab diesem Zeitpunkt in den folgenden Zeitscheiben die Sollwerte für den anormalen Betrieb an die Aktuatoren **(150)** weitergeleitet werden, bis die technische Vorrichtung einen sicheren Zustand erreicht.

2. Verfahren nach Anspruch 1, **wobei** das Monitor Subsystem, MSS, **(120)** in jeder Zeitscheibe überprüft, ob der Satz von Sollwerten für den anormalen Betrieb, welchen es vom *Critical Event Handling Subsystem, CEHSS,* **(130)** über das FTDSS (**100**), insbesondere mittels Nachrichten **(131, 102),** erhält, mit dem Umweltmodell, das auf der Basis der Sensordaten des MSS vom MSS errechnet wurde, vereinbar ist und eine sichere Führung der technischen Vorrichtung im anomalen Betrieb gewährleistet, und falls dies der Fall ist, einen weiteren Korrektheitsindikator, den Korrektheitsindikator-2, auf den Wert TRUE setzt, und falls dies nicht der Fall ist oder wenn in einer Zeitscheibe kein Satz von Sollwerten für den anormalen Betrieb vom CEHSS **(130)** empfangen wurde, den Korrektheitsindikator-2 auf den Wert FALSE setzt, und wobei das Monitor Subsystem, MSS, **(120)** den Korrektheitsindikator-2 anschließend an das *Normal-Processing Subsystem, NPSS,* **(110)** sendet, und wobei das *Normal-Processing Subsystem, NPSS,* **(110)** in jeder Zeitscheibe überprüft, ob der vom Monitor Subsystem, MSS, erhaltene Korrektheitsindikator-2 den Wert FALSE einnimmt, und falls dies der Fall ist, die normale Führung der technischen Vorrichtung abbricht und die technische Vorrichtung in einen sicheren Zustand führt.

3. Verfahren nach Anspruch 1 oder 2, **wobei** das *Normal-Processing Subsystem, NPSS,* (**110**) *in* jeder Zeitscheibe neben dem Satz von Sollwerten für den normalen Betrieb auch eine geplante Trajektorie für den *normalen Betrieb,* beispielsweise in der Nachricht (**112**), in welcher es den Satz von Sollwerten für den Normalbetrieb an das Monitor Subsystem, MSS, (**120**) sendet, übermittelt.

4. Verfahren nach einem der Ansprüche 1 bis 3, **wobei** der Zeitserver fehlertolerant ist.

5. Verfahren nach einem der Ansprüche 1 bis 4, **wobei** die Datenverarbeitungssubsysteme **(110, 120, 130)** *unsichere* Subsysteme sind, d.h. sie enthalten *komplexe Software,* die auf nicht fehlertoleranter Hardware ausgeführt wird.

6. Verfahren nach einem der Ansprüche 1 bis 5, **wobei** die Datenverarbeitungssubsysteme **(110, 120, 130)** eine diversitäre Software enthalten, beispielsweise um die Sollwerte für die Aktuatoren **(150)** und/oder ein Umweltmodell zu berechnen.

7. Verfahren nach einem der Ansprüche 1 bis 6, **wobei** jedes der Datenverarbeitungssubsysteme **(110, 120, 130)** über einen eigenen Satz von Sensoren verfügt.

8. Verfahren nach einem der Ansprüche 1 bis 7, **wobei** jedes der Subsysteme **(100, 110, 120, 130, 210)** über eine eigene Energieversorgung verfügt.

9. Echtzeitcomputersystem, insbesondere verteiltes Echtzeitcomputersystem, zur Steuerung einer technischen Vorrichtung, z.B. einer technischen Anlage, wie etwa einem Roboter oder einem Fahrzeug, insbesondere einem Kraftfahrzeug, wobei das Echtzeitcomputersystem
- Subsysteme **(100, 110, 120, 130),** insbesondere eine Vielzahl von Subsystemen, umfasst, wobei beispielsweise die Subsysteme hierarchisch angeordnet sind,
- und wobei die Subsysteme über eine globale Zeit synchronisiert sind, beispielsweise indem ein Zeitserver **(210)** vorhanden ist, der vorzugsweise außerhalb der Hierarchie der Subsysteme steht, wobei der Zeitserver **(210)** dazu eingerichtet ist, periodisch Synchronisationsnachrichten **(211)** an jedes Subsystem, etwa an die Uhren jedes Subsystems, zur Synchronisation der Subsysteme bzw. der Uhren der Subsysteme zum Aufbau der globalen Zeit zu senden, und wobei
- unter Verwendung dieser globalen Zeit die Zeitachse in eine Folge von synchronisierten Zeitscheiben unterteilt ist,
**dadurch gekennzeichnet, dass**
- jedes Subsystem **(100, 110, 120, 130),** und falls vorhanden der Zeitserver **(210),** jeweils eine eigene Fault-Containment Unit bilden, und wobei
- eines der Subsysteme ein Entscheidungssubsystem, das sogenannte *Fault-Tolerant Decision Subsystem,* FTDSS, **(100),** ist, welches vorzugsweise in der höchsten Ebene der Hierarchie platziert ist, wobei das FTDSS **(100)** dazu eingerichtet ist, mittels Nachrichten **(101)** in jeder Zeitscheibe Sollwerte an Aktuatoren **(150)** zu übergeben, wobei das *Fault-Tolerant Decision Subsystem,* FTDSS, **(100)** ein sicheres Subsystem ist, d.h. einfache Software enthält, die auf einer fehlertoleranten Hardware ausgeführt wird, und wobei
- mindestens oder genau drei *Datenverarbeitungssubsysteme,* ein *Normal-Processing Subsystem, NPSS,* **(110),** ein *Monitor Subsystem, MSS,* **(120),** und ein *Critical Event Handling Subsystem, CEHSS,* **(130),** vorgesehen sind, welche vorzugsweise auf der nächst niedrigeren Hierarchieebene platziert sind, wobei diese zumindest oder genau drei Datenverarbeitungssubsysteme dazu eingerichtet sind, mit Sensoren **(160)** Sensordaten einer Umgebung, die mit den Sensoren **(160)** beobachtet wird, zu erfassen und diese Sensordaten unabhängig voneinander auszuwerten, wobei
- die Umgebung jeweils am Beginn einer Zeitscheibe von den Datenverarbeitungssubsystemen **(110, 120, 130)** beobachtet wird und während dieser Zeitscheibe Berechnungen mit den durch die zu Beginn der Zeitscheibe durchgeführten Beobachtungen der Umgebung gewonnenen Sensordaten durchgeführt werden,
- das *Normal-Processing Subsystem, NPSS,* **(110)** dazu eingerichtet ist, in jeder Zeitscheibe, vorzugsweise am Ende der Zeitscheibe, einen Satz von Sollwerten für einen *normalen Betrieb* in einer Nachricht **(111)** an das *Fault-Tolerant Decision Subsystem,* FTDSS, **(100)** zu senden, und wobei
- das *Critical Event Handling Subsystem, CEHSS,* **(130)** dazu eingerichtet ist, in jeder Zeitscheibe, vorzugsweise am Ende der Zeitscheibe, einen Satz von Sollwerten für einen *anormalen Betrieb* in einer Nachricht **(131)** an das *Fault-Tolerant Decision Subsystem,* FTDSS, **(100)** zu senden, **dadurch gekennzeichnet, dass**
- das *Normal-Processing Subsystem, NPSS,* **(110)** dazu eingerichtet ist, in jeder Zeitscheibe, vorzugsweise am Ende der Zeitscheibe, einen Satz von Sollwerten für einen *normalen Betrieb* in einer Nachricht **(112)** an das Monitor Subsystem, MSS, **(120)** zu senden,
- das *Fault-Tolerant Decision Subsystem,* FTDSS, **(100)** dazu eingerichtet ist, die beiden empfangenen Sätze von Sollwerten für den normalen Betrieb und den anomalen Betrieb in jeder Zeitscheibe in einer Nachricht **(102)** an das *Monitor Subsystem, MSS,* **(120)** zu senden, und wobei
- das Monitor Subsystem, MSS, **(120)** dazu eingerichtet ist, in jeder Zeitscheibe eine Überprüfung durchzuführen, ob der Satz von Sollwerten für den normalen Betrieb, den es vom *Normal-Processing Subsystem, NPSS,* **(110)** in der Nachricht **(112)** erhalten hat, mit einem Umweltmodell, das vom MSS **(120)** auf der Basis der Sensordaten **(160)** des MSS **(120)** errechnet wurde, vereinbar ist und eine sichere Führung der technischen Vorrichtung unter normalen Bedingungen gewährleistet und weiters das Monitor Subsystem, MSS, **(120)** dazu eingerichtet ist, in jeder Zeitscheibe eine Überprüfung durchzuführen, ob der Satz von Sollwerten für den normalen Betrieb, den es vom *Normal-Processing Subsystem, NPSS,* **(110)** in der Nachricht **(112)** erhalten hat, identisch ist mit dem entsprechenden Satz von Sollwerten, die vom *Normal-Processing Subsystem, NPSS,* **(110)** über das *Fault-Tolerant Decision Subsystem,* FTDSS, **(100)** an das Monitor Subsystem, MSS, **(120)** gesendet wurden, und
- falls beide Überprüfungen positiv sind, einen Korrektheitsindikator, Korrektheitsindikator-1, auf den Wert TRUE zu setzen und, falls eine der beiden Überprüfungen negativ ist oder beide Überprüfungen negativ sind, den Korrektheitsindikator-1 auf den Wert FALSE zu setzen und den Korrektheitsindikator-1 bzw. den Wert des Korrektheitsindikator-1 in jeder Zeitscheibe in einer Nachricht **(121)** an das *Fault-Tolerant Decision Subsystem,* FTDSS, **(100)** zu senden, und wobei
- das *Fault-Tolerant Decision Subsystem,* FTDSS, **(100)** in jeder Zeitscheibe wie folgt entscheidet: im Falle, dass der Korrektheitsindikator-1 den Wert TRUE aufweist, wird der Satz von Sollwerten für den normalen Betrieb, etwa in Nachrichten **(101),** an die Aktuatoren **(150)** übergeben, im Falle, dass der Korrektheitsindikator-1 den Wert FALSE aufweist oder eine von dem FTDSS **(100)** erwartete Nachricht **(121)** mit dem Korrektheitsindikator-1 ausbleibt, wird der Satz von Sollwerten für den anormalen Betrieb, etwa in Nachrichten **(101),** an die Aktuatoren **(150)** weitergeleitet, wobei in diesem Fall ab diesem Zeitpunkt in den folgenden Zeitscheiben die Sollwerte für den anormalen Betrieb an die Aktuatoren **(150)** weitergeleitet werden, bis die technische Vorrichtung einen sicheren Zustand erreicht.

10. Echtzeitcomputersystem nach Anspruch 9, **wobei** das Monitor Subsystem, MSS, **(120)** dazu eingerichtet ist, in jeder Zeitscheibe zu überprüfen, ob der Satz von Sollwerten für den anormalen Betrieb, welchen es vom *Critical Event Handling Subsystem, CEHSS,* **(130)** über das FTDSS **(100),** insbesondere mittels Nachrichten **(131, 102),** erhält, mit dem Umweltmodell, das auf der Basis der Sensordaten des MSS vom MSS errechnet wurde, vereinbar ist und eine sichere Führung des Prozesses im anomalen Betrieb gewährleistet, und dazu eingerichtet ist, falls dies der Fall ist, einen weiteren Korrektheitsindikator, den Korrektheitsindikator-2, auf den Wert TRUE zu setzen, und falls dies nicht der Fall ist oder wenn in einer Zeitscheibe kein Satz von Sollwerten für den anormalen Betrieb vom CEHSS **(130)** empfangen wurde, den Korrektheitsindikator-2 auf den Wert FALSE zu setzen, und wobei das Monitor Subsystem, MSS, **(120)** dazu eingerichtet ist, den Korrektheitsindikator-2 anschließend an das *Normal-Processing Subsystem, NPSS,* **(110)** zu senden, und wobei das *Normal-Processing Subsystem, NPSS,* **(110)** dazu eingerichet ist, in jeder Zeitscheibe zu überprüfen, ob der vom Monitor Subsystem, MSS, erhaltene Korrektheitsindikator-2 den Wert FALSE einnimmt, und falls dies der Fall ist, die normale Führung der technischen Vorrichtung abzubrechen und die technische Vorrichtung in einen sicheren Zustand zu führen.

11. Echtzeitcomputersystem nach Anspruch 9 oder 10, **wobei** das *Normal-Processing Subsystem, NPSS,* **(110)** *in* jeder Zeitscheibe neben dem Satz von Sollwerten für den normalen Betrieb auch eine geplante Trajektorie für den *normalen Betrieb,* beispielsweise in der Nachricht **(112),** in welcher es den Satz von Sollwerten für den Normalbetrieb an das Monitor Subsystem, MSS, **(120)** sendet, übermittelt.

12. Echtzeitcomputersystem nach einem der Ansprüche 9 bis 11, **wobei** der Zeitserver fehlertolerant ist.

13. Echtzeitcomputersystem nach einem der Ansprüche 9 bis 12, **wobei** die Datenverarbeitungssubsysteme **(110, 120, 130)** *unsichere* Subsysteme sind, d.h. sie enthalten *komplexe Software,* die auf nicht fehlertoleranter Hardware ausgeführt wird.

14. Echtzeitcomputersystem nach einem der Ansprüche 9 bis 13, **wobei** die Datenverarbeitungssubsysteme **(110, 120, 130)** eine diversitäre Software enthalten, beispielsweise um die Sollwerte für die Aktuatoren **(150)** und/oder ein Umweltmodell.

15. Echtzeitcomputersystem nach einem der Ansprüche 9 bis 14, **wobei** jedes der Datenverarbeitungssubsysteme **(110, 120, 130)** über einen eigenen Satz von Sensoren verfügt.

16. Echtzeitcomputersystem nach einem der Ansprüche 9 bis 15, **wobei** jedes der Subsysteme **(100, 110, 120, 130, 210)** über eine eigene Energieversorgung verfügt.

## Claims

1. Method for controlling a technical device, e.g. a technical installation, such as a robot or a vehicle, in particular a motor vehicle, with a distributed real-time computer system, wherein the real-time computer system comprises
- subsystems (100, 110, 120, 130), in particular a plurality of subsystems, wherein, for example, the subsystems are arranged hierarchically,
- and wherein the subsystems are synchronized via a global time, for example by having a time server (210) which is preferably outside the hierarchy of the subsystems, wherein the time server (210) periodically sends synchronization messages (211) to each subsystem, for example to the clocks of each subsystem, to synchronize the subsystems or the clocks of the subsystems to establish the global time, and wherein
- using this global time, the time axis is divided into a sequence of synchronized time slices, wherein
- each subsystem (100, 110, 120, 130) and, if present, the time server (210) each form a separate fault-containment unit, and wherein
- one of the subsystems is a decision subsystem, the so-called Fault-Tolerant Decision Subsystem, FTDSS, (100), which is preferably placed in the highest level of the hierarchy, wherein the FTDSS (100) can transfer setpoints to actuators (150) by means of messages (101) in each time slice, wherein the Fault-Tolerant Decision Subsystem, FTDSS, (100) is a safe subsystem, i.e. contains simple software running on a fault-tolerant hardware, and wherein
- at least or exactly three data processing subsystems, a Normal Processing Subsystem, NPSS, (110), a Monitor Subsystem, MSS, (120), and a Critical Event Handling Subsystem, CEHSS, (130), are provided, which are preferably placed on the next lower hierarchy level, wherein these at least or exactly three data processing subsystems with sensors (160) acquire sensor data of an environment which is observed with the sensors (160) and evaluate these sensor data independently of one another, wherein
- the environment is observed by the data processing subsystems (110, 120, 130) at the beginning of each time slice and calculations are performed during this time slice using the sensor data obtained from the observations of the environment carried out at the beginning of the time slice,
- the Normal Processing Subsystem, NPSS, (110) sends in each time slice, preferably at the end of the time slice, a set of setpoints for normal operation in a message (111) to the Fault Tolerant Decision Subsystem, FTDSS, (100), and wherein
- the Critical Event Handling Subsystem, CEHSS, (130) sends in each time slice, preferably at the end of the time slice, a set of target values for an abnormal operation in a message (131) to the Fault-Tolerant Decision Subsystem, FTDSS, (100), **characterized in that**
- the normal processing subsystem, NPSS, (110) sends a set of setpoints for normal operation in a message (112) to the monitor subsystem, MSS, (120) in each time slice, preferably at the end of the time slice,
- the Fault Tolerant Decision Subsystem, FTDSS, (100) sends the two received sets of setpoints for normal operation and abnormal operation in each time slice, preferably at the end of the time slice, in a message (102) to the Monitor Subsystem, MSS, (120), and wherein
- the monitor subsystem, MSS, (120) performs a check in each time slice whether the set of target values for normal operation received from the normal processing subsystem, NPSS, (110) in the message (112) is compatible with an environmental model calculated by the MSS (120) on the basis of the sensor data (160) of the MSS (120) and ensures safe operation of the technical device under normal conditions, and further the monitor subsystem, MSS, (120) performs a check in each time slice whether the set of target values for normal operation received from the normal processing subsystem, NPSS, (110) in the message (112) is compatible with an environmental model calculated by the MSS (120) on the basis of the sensor data (160) of the MSS (120) and ensures safe operation of the technical device under normal conditions, MSS, (120) performs a check in each time slice whether the set of setpoints for normal operation received from the Normal Processing Subsystem, NPSS, (110) in the message (112) is identical to the corresponding set of setpoints sent from the Normal Processing Subsystem, NPSS, (110) to the Monitor Subsystem, MSS, (120) via the Fault Tolerant Decision Subsystem, FTDSS, (100), and
- if both checks are positive, sets a Correctness Indicator, Correctness Indicator-1, to the value TRUE and, if one of the two checks is negative or both checks are negative, sets the Correctness Indicator-1 to the value FALSE and sends the Correctness Indicator-1 or the value of the Correctness Indicator-1 in each time slice in a message (121) to the Fault-Tolerant Decision Subsystem, FTDSS, (100), and wherein
- the Fault-Tolerant Decision Subsystem, FTDSS, (100) decides in each time slice as follows: in the event that the Correctness Indicator-1 has the value TRUE, the set of target values for normal operation, for example in messages (101), is passed to the actuators (150), in the event that the Correctness Indicator-1 has the value FALSE or a message (121) expected by the FTDSS (100) with the Correctness Indicator-1 is absent, the set of setpoint values for the abnormal operation, for example in messages (101), is forwarded to the actuators (150), in which case the setpoint values for the abnormal operation are forwarded to the actuators (150) from this point in time in the following time slices until the technical device reaches a safe state.

2. Method according to claim 1, wherein the monitor subsystem, MSS, (120) checks in each time slice whether the set of target values for the abnormal operation, which it receives from the critical event handling subsystem, CEHSS, (130) via the FTDSS (100), in particular by means of messages (131, 102), is compatible with the environmental model calculated by the MSS on the basis of the sensor data of the MSS and ensures safe guidance of the technical device in abnormal operation, and if this is the case, sets a further correctness indicator, the correctness indicator-2, to the value TRUE, and if this is not the case or if no set of setpoints for abnormal operation has been received from the CEHSS (130) in a time slice, sets the Correctness Indicator-2 to the value FALSE, and wherein the Monitor Subsystem, MSS, (120) subsequently sends the Correctness Indicator-2 to the Normal Processing Subsystem, NPSS, (110), and wherein the normal processing subsystem, NPSS, (110) checks in each time slice whether the correctness indicator-2 received from the monitor subsystem, MSS, takes the value FALSE, and if this is the case, aborts the normal guidance of the technical device and guides the technical device to a safe state.

3. Method according to claim 1 or 2, wherein the normal processing subsystem, NPSS, (110) in each time slice, in addition to the set of setpoints for normal operation, also transmits a scheduled trajectory for normal operation, for example in the message (112) in which it sends the set of setpoints for normal operation to the monitor subsystem, MSS, (120).

4. Method according to any one of claims 1 to 3, wherein the time server is fault tolerant.

5. Method according to any one of claims 1 to 4, wherein the data processing subsystems (110, 120, 130) are insecure subsystems, i.e. they comprise complex software running on non-fault tolerant hardware.

6. Method according to any one of claims 1 to 5, wherein the data processing subsystems (110, 120, 130) comprise diverse software, for example to calculate the setpoints for the actuators (150) and/or an environmental model.

7. Method according to any one of claims 1 to 6, wherein each of the data processing subsystems (110, 120, 130) has its own set of sensors.

8. Method according to any one of claims 1 to 7, wherein each of the subsystems (100, 110, 120, 130, 210) has its own power supply.

9. Real-time computer system, in particular a distributed real-time computer system, for controlling a technical device, e.g. a technical installation, such as a robot or a vehicle, in particular a motor vehicle, wherein the real-time computer system
- subsystems (100, 110, 120, 130), in particular a plurality of subsystems, wherein, for example, the subsystems are arranged hierarchically,
- and wherein the subsystems are synchronized via a global time, for example in that a time server (210) is present, which is preferably located outside the hierarchy of the subsystems, wherein the time server (210) is set up to periodically send synchronization messages (211) to each subsystem, for example to the clocks of each subsystem, in order to synchronize the subsystems or the clocks of the subsystems in order to establish the global time, and wherein
- using this global time, the time axis is divided into a sequence of synchronized time slices, **characterized in that**
- each subsystem (100, 110, 120, 130), and if present the time server (210), each form a separate fault-containment unit, and wherein
- one of the subsystems is a decision subsystem, the so-called Fault-Tolerant Decision Subsystem, FTDSS, (100), which is preferably placed in the highest level of the hierarchy, wherein the FTDSS (100) is set up to transfer setpoints to actuators (150) by means of messages (101) in each time slice, wherein the Fault-Tolerant Decision Subsystem, FTDSS, (100) is a safe subsystem, i.e. contains simple software which is executed on fault-tolerant hardware, and wherein
- at least or exactly three data processing subsystems, a Normal Processing Subsystem, NPSS, (110), a Monitor Subsystem, MSS, (120), and a Critical Event Handling Subsystem, CEHSS, (130), are provided, which are preferably placed at the next lower hierarchy level, wherein these at least or exactly three data processing subsystems are set up to acquire sensor data of an environment, which is observed with the sensors (160), with sensors (160) and to evaluate these sensor data independently of one another, wherein
- the environment is observed by the data processing subsystems (110, 120, 130) at the beginning of a respective time slice and calculations are carried out during this time slice using the sensor data obtained by the observations of the environment carried out at the beginning of the time slice,
- the Normal Processing Subsystem, NPSS, (110) is arranged to send in each time slice, preferably at the end of the time slice, a set of setpoints for normal operation in a message (111) to the Fault Tolerant Decision Subsystem, FTDSS, (100), and wherein
- the Critical Event Handling Subsystem, CEHSS, (130) is arranged to send in each time slice, preferably at the end of the time slice, a set of target values for an abnormal operation in a message (131) to the Fault-Tolerant Decision Subsystem, FTDSS, (100), **characterized in that**
- the normal processing subsystem, NPSS, (110) is set up to send a set of setpoint values for normal operation in a message (112) to the monitor subsystem, MSS, (120) in each time slice, preferably at the end of the time slice,
- the Fault-Tolerant Decision Subsystem, FTDSS, (100) is arranged to send the two received sets of setpoints for normal operation and abnormal operation in each time slice in a message (102) to the Monitor Subsystem, MSS, (120), and wherein
- the monitor subsystem, MSS, (120) is arranged to perform, in each time slice, a check whether the set of target values for normal operation received from the normal processing subsystem, NPSS, (110) in the message (112) is compatible with an environmental model calculated by the MSS (120) on the basis of the sensor data (160) of the MSS (120) and ensures safe operation of the technical device under normal conditions, and furthermore the monitor subsystem, MSS, (120) is arranged to perform, in each time slice, a check whether the set of target values for normal operation received from the normal processing subsystem, NPSS, (110) in the message (112) is compatible with an environmental model calculated by the MSS (120) on the basis of the sensor data (160) of the MSS (120) and ensures safe operation of the technical device under normal conditions, MSS, (120) is arranged to perform a check in each time slice whether the set of setpoints for normal operation received from the Normal Processing Subsystem, NPSS, (110) in the message (112) is identical to the corresponding set of setpoints sent from the Normal Processing Subsystem, NPSS, (110) via the Fault Tolerant Decision Subsystem, FTDSS, (100) to the Monitor Subsystem, MSS, (120), and
- if both checks are positive, setting a Correctness Indicator, Correctness Indicator-1, to the value TRUE and, if one of the two checks is negative or both checks are negative, setting the Correctness Indicator-1 to the value FALSE and sending the Correctness Indicator-1 or the value of the Correctness Indicator-1 in each time slice in a message (121) to the Fault-Tolerant Decision Subsystem, FTDSS, (100), and wherein
- the Fault-Tolerant Decision Subsystem, FTDSS, (100) decides in each time slice as follows: in the event that the Correctness Indicator-1 has the value TRUE, the set of target values for normal operation, for example in messages (101), is passed to the actuators (150), in the event that the Correctness Indicator-1 has the value FALSE or a message (121) expected by the FTDSS (100) with the Correctness Indicator-1 is absent, the set of set values for the abnormal operation, for example in messages (101), is forwarded to the actuators (150), in which case the set values for the abnormal operation are forwarded to the actuators (150) from this point in time in the following time slices until the technical device reaches a safe state.

10. Real-time computer system according to claim 9, wherein the monitor subsystem, MSS, (120) is arranged to check in each time slice whether the set of target values for the abnormal operation, which it receives from the critical event handling subsystem, CEHSS, (130) via the FTDSS (100), in particular by means of messages (131, 102), is compatible with the environmental model calculated by the MSS on the basis of the sensors of the MSS and ensures safe management of the process in the abnormal operation, and is arranged to do so if this is the case, is compatible with the environmental model calculated by the MSS on the basis of the sensor data of the MSS and ensures safe management of the process in abnormal operation, and is arranged, if this is the case, to set a further correctness indicator, the correctness indicator-2, to the value TRUE, and if this is not the case or if no set of setpoints for abnormal operation has been received from the CEHSS (130) in a time slice, to set the Correctness Indicator-2 to the value FALSE, and wherein the Monitor Subsystem, MSS, (120) is arranged to subsequently send the Correctness Indicator-2 to the Normal Processing Subsystem, NPSS, (110), and wherein the normal processing subsystem, NPSS, (110) is arranged to check in each time slice whether the correctness indicator-2 received from the monitor subsystem, MSS, takes the value FALSE, and if this is the case, to abort the normal guidance of the technical device and to guide the technical device to a safe state.

11. Real-time computer system according to claim 9 or 10, wherein the normal processing subsystem, NPSS, (110) in each time slice, in addition to the set of setpoints for normal operation, also transmits a scheduled trajectory for normal operation, for example in the message (112) in which it sends the set of setpoints for normal operation to the monitor subsystem, MSS, (120).

12. Real-time computer system according to any one of claims 9 to 11, wherein the time server is fault tolerant.

13. Real-time computer system according to any one of claims 9 to 12, wherein the data processing subsystems (110, 120, 130) are unsafe subsystems, i.e. they comprise complex software running on non-fault tolerant hardware.

14. Real-time computer system according to any one of claims 9 to 13, wherein the data processing subsystems (110, 120, 130) comprise diverse software, for example around the setpoints for the actuators (150) and/or an environmental model.

15. Real-time computer system according to any one of claims 9 to 14, wherein each of the data processing subsystems (110, 120, 130) has its own set of sensors.

16. Real-time computer system according to any one of claims 9 to 15, wherein each of the subsystems (100, 110, 120, 130, 210) has its own power supply.

## Revendications

1. Procédé de commande d'un dispositif technique, par exemple une installation technique, telle qu'un robot ou un véhicule, en particulier un véhicule à moteur, avec un système informatique en temps réel réparti, le système informatique en temps réel comprenant
- comprend des sous-systèmes (100, 110, 120, 130), en particulier une pluralité de sous-systèmes, les sous-systèmes étant par exemple disposés de manière hiérarchique,
- et dans lequel les sous-systèmes sont synchronisés par l'intermédiaire d'un temps global, par exemple en ce qu'il existe un serveur de temps (210) qui est de préférence en dehors de la hiérarchie des sous-systèmes, dans lequel le serveur de temps (210) envoie périodiquement des messages de synchronisation (211) à chaque sous-système, par exemple aux horloges de chaque sous-système, pour synchroniser les sous-systèmes ou les horloges des sous-systèmes pour établir le temps global, et dans lequel
- en utilisant ce temps global, l'axe temporel est divisé en une séquence de tranches de temps synchronisées, où
- chaque sous-système (100, 110, 120, 130), et le cas échéant le serveur de temps (210), forment chacun une unité de confinement par défaut propre, et dans lequel
- l'un des sous-systèmes est un sous-système de décision, appelé sous-système de décision à tolérance de panne, FTDSS, (100), qui est placé de préférence au niveau le plus élevé de la hiérarchie, le FTDSS (100) pouvant transmettre des valeurs de consigne à des actionneurs (150) au moyen de messages (101) dans chaque tranche de temps, le sous-système de décision à tolérance de panne, FTDSS, (100) étant un sous-système sûr, c'est-à-dire contenant un logiciel simple qui est exécuté sur un matériel tolérant aux pannes, et dans lequel
- au moins ou exactement trois sous-systèmes de traitement de données, un sous-système de traitement normal, NPSS, (110), un sous-système de surveillance, MSS, (120), et un sous-système de gestion des événements critiques, CEHSS, (130), sont prévus, lesquels sont placés de préférence au niveau hiérarchique immédiatement inférieur, ces au moins ou exactement trois sous-systèmes de traitement de données saisissant avec des capteurs (160) des données de capteur d'un environnement qui est observé avec les capteurs (160) et évaluant ces données de capteur indépendamment les unes des autres, où
- l'environnement est observé par les sous-systèmes de traitement de données (110, 120, 130) respectivement au début d'une tranche de temps et, pendant cette tranche de temps, des calculs sont effectués avec les données de capteur obtenues par l'observation de l'environnement effectuée au début de la tranche de temps,
- le sous-système de traitement normal, NPSS, (110) envoie dans chaque tranche de temps, de préférence à la fin de la tranche de temps, un ensemble de valeurs de consigne pour un fonctionnement normal dans un message (111) au sous-système de décision à tolérance de panne, FTDSS, (100), et dans lequel
- le sous-système de gestion des événements critiques, CEHSS, (130) envoie dans chaque tranche de temps, de préférence à la fin de la tranche de temps, un ensemble de valeurs de consigne pour un fonctionnement anormal dans un message (131) au sous-système de décision à tolérance de panne, FTDSS, (100), **caractérisé en ce que**
- le sous-système de traitement normal, NPSS, (110) envoie dans chaque tranche de temps, de préférence à la fin de la tranche de temps, un ensemble de valeurs de consigne pour un fonctionnement normal dans un message (112) au sous-système de surveillance, MSS, (120),
- le sous-système de décision à tolérance de panne, FTDSS, (100) envoie les deux ensembles reçus de valeurs de consigne pour le fonctionnement normal et le fonctionnement anormal dans chaque tranche de temps, de préférence à la fin de la tranche de temps, dans un message (102) au sous-système moniteur, MSS, (120), et dans lequel
- MSS, (120) effectue une vérification dans chaque tranche de temps pour déterminer si l'ensemble de valeurs de consigne pour le fonctionnement normal qu'il a reçu du sous-système de traitement normal, NPSS, (110) dans le message (112) est identique à l'ensemble correspondant de valeurs de consigne envoyé par le sous-système de traitement normal, NPSS, (110) au sous-système de surveillance, MSS, (120) par l'intermédiaire du sous-système de décision tolérant les défaillances, FTDSS, (100), et
- si les deux vérifications sont positives, définit un indicateur de correction, indicateur de correction-1, à la valeur VRAI et, si l'une des deux vérifications est négative ou si les deux vérifications sont négatives, définit l'indicateur de correction-1 à la valeur FAUX et transmet l'indicateur de correction-1 ou la valeur de l'indicateur de correction-1 dans chaque tranche de temps dans un message (121) au sous-système de décision tolérant la faute, FTDSS, (100), et dans lequel
- le sous-système décisionnel de tolérance à la faute, FTDSS, (100) décide, dans chaque tranche de temps, comme suit : dans le cas où l'indicateur de correction-1 a la valeur TRUE, l'ensemble de valeurs de consigne pour le fonctionnement normal, par exemple dans des messages (101), est transmis aux actionneurs (150), dans le cas où l'indicateur de correction-1 a la valeur FALSE ou un message (121) attendu par le FTDSS (100) avec l'indicateur de correction-1 n'est pas reçu, l'ensemble de consignes de fonctionnement anormal est transmis, par exemple dans des messages (101), aux actionneurs (150), auquel cas, à partir de ce moment, dans les tranches de temps suivantes, les consignes de fonctionnement anormal sont transmises aux actionneurs (150) jusqu'à ce que le dispositif technique atteigne un état sûr.

2. Procédé selon la revendication 1, dans lequel le sous-système de surveillance, MSS, (120) vérifie à chaque tranche horaire si l'ensemble de valeurs de consigne pour le fonctionnement anormal qu'il reçoit du sous-système de gestion des événements critiques, CEHSS, (130) via le FTDSS (100), notamment au moyen de messages (131, 102), est compatible avec le modèle d'environnement calculé par le MSS sur la base des données de capteur du MSS et garantit une conduite sûre du dispositif technique en fonctionnement anormal, et si c'est le cas, définit un autre indicateur de correction, l'indicateur de correction-2, à la valeur VRAI, et si ce n'est pas le cas ou si aucun ensemble de valeurs de consigne pour le fonctionnement anormal n'a été reçu du CEHSS (130) dans une tranche de temps, règle l'indicateur de correction-2 sur la valeur FALSE, et dans lequel le sous-système de surveillance, MSS, (120) envoie ensuite l'indicateur de correction-2 au sous-système de traitement normal, NPSS, (110), et dans lequel le sous-système de traitement normal, NPSS, (110) vérifie à chaque tranche de temps si l'indicateur de correction - 2 reçu du sous-système moniteur, MSS, prend la valeur FALSE, et si c'est le cas, interrompt le guidage normal du dispositif technique et guide le dispositif technique vers un état sûr.

3. Procédé selon la revendication 1 ou 2, dans lequel le sous-système de traitement normal, NPSS, (110) transmet dans chaque tranche de temps, en plus de l'ensemble de consignes pour le fonctionnement normal, une trajectoire planifiée pour le fonctionnement normal, par exemple dans le message (112) dans lequel il envoie l'ensemble de consignes pour le fonctionnement normal au sous-système de surveillance, MSS, (120).

4. Procédé selon l'une quelconque des revendications 1 à 3, dans lequel le serveur de temps est tolérant aux pannes.

5. Procédé selon l'une des revendications 1 à 4, dans lequel les sous-systèmes de traitement de données (110, 120, 130) sont des sous-systèmes non sécurisés, c'est-à-dire qu'ils contiennent des logiciels complexes exécutés sur du matériel non tolérant aux pannes.

6. Procédé selon l'une des revendications 1 à 5, dans lequel les sous-systèmes de traitement de données (110, 120, 130) contiennent un logiciel diversitaire, par exemple pour calculer les valeurs de consigne pour les actionneurs (150) et/ou un modèle environnemental.

7. Procédé selon l'une des revendications 1 à 6, dans lequel chacun des sous-systèmes de traitement de données (110, 120, 130) dispose de son propre ensemble de capteurs.

8. Procédé selon l'une des revendications 1 à 7, dans lequel chacun des sous-systèmes (100, 110, 120, 130, 210) dispose de sa propre alimentation en énergie.

9. Système informatique en temps réel, en particulier système informatique en temps réel réparti, pour la commande d'un dispositif technique, par exemple une installation technique, telle qu'un robot ou un véhicule, en particulier un véhicule automobile, le système informatique en temps réel comprenant
- comprend des sous-systèmes (100, 110, 120, 130), en particulier une pluralité de sous-systèmes, les sous-systèmes étant par exemple disposés de manière hiérarchique,
- et dans lequel les sous-systèmes sont synchronisés par l'intermédiaire d'un temps global, par exemple en ce qu'il existe un serveur de temps (210) qui se trouve de préférence en dehors de la hiérarchie des sous-systèmes, dans lequel le serveur de temps (210) est conçu pour envoyer périodiquement des messages de synchronisation (211) à chaque sous-système, par exemple aux horloges de chaque sous-système, pour synchroniser les sous-systèmes ou les horloges des sous-systèmes pour établir le temps global, et dans lequel
- en utilisant ce temps global, l'axe temporel est divisé en une séquence de tranches de temps synchronisées,
**caractérisé en ce que**
- chaque sous-système (100, 110, 120, 130) et, s'il est présent, le serveur de temps (210), forment chacun une unité de confinement par défaut propre, et où
- l'un des sous-systèmes est un sous-système de décision, appelé sous-système de décision à tolérance de panne, FTDSS, (100), qui est placé de préférence au niveau le plus élevé de la hiérarchie, le FTDSS (100) étant conçu pour transmettre des valeurs de consigne à des actionneurs (150) au moyen de messages (101) dans chaque tranche de temps, le sous-système de décision à tolérance de panne, FTDSS, (100) étant un sous-système sûr, c'est-à-dire contenant un logiciel simple qui est exécuté sur un matériel tolérant aux pannes, et dans lequel
- au moins ou exactement trois sous-systèmes de traitement de données, un sous-système de traitement normal, NPSS, (110), un sous-système de surveillance, MSS, (120), et un sous-système de gestion d'événements critiques, CEHSS, (130), sont prévus, lesquels sont placés de préférence au niveau hiérarchique immédiatement inférieur, ces au moins ou exactement trois sous-systèmes de traitement de données étant conçus pour saisir avec des capteurs (160) des données de capteur d'un environnement qui est observé avec les capteurs (160) et pour évaluer ces données de capteur indépendamment les unes des autres, où
- l'environnement est observé par les sous-systèmes de traitement de données (110, 120, 130) respectivement au début d'une tranche de temps et, pendant cette tranche de temps, des calculs sont effectués avec les données de capteur obtenues par les observations de l'environnement effectuées au début de la tranche de temps,
- le sous-système de traitement normal, NPSS, (110) est adapté pour envoyer, dans chaque tranche de temps, de préférence à la fin de la tranche de temps, un ensemble de valeurs de consigne pour un fonctionnement normal dans un message (111) au sous-système de décision à tolérance de panne, FTDSS, (100), et dans lequel
- le sous-système de gestion d'événements critiques, CEHSS, (130) est agencé pour envoyer, dans chaque tranche de temps, de préférence à la fin de la tranche de temps, un ensemble de valeurs de consigne pour un fonctionnement anormal dans un message (131) au sous-système de décision tolérant la faute, FTDSS, (100), **caractérisé en ce que**
- le sous-système de traitement normal, NPSS, (110) est adapté pour envoyer, dans chaque tranche de temps, de préférence à la fin de la tranche de temps, un ensemble de valeurs de consigne pour un fonctionnement normal dans un message (112) au sous-système de surveillance, MSS, (120),
- le sous-système de décision à tolérance de panne, FTDSS, (100) est adapté pour envoyer les deux ensembles reçus de valeurs de consigne pour le fonctionnement normal et le fonctionnement anormal dans chaque tranche de temps dans un message (102) au sous-système moniteur, MSS, (120), et dans lequel
MSS, (120) est adapté pour effectuer, dans chaque tranche de temps, une vérification pour savoir si l'ensemble de valeurs de consigne pour le fonctionnement normal qu'il a reçu du sous-système de traitement normal, NPSS, (110) dans le message (112) est identique à l'ensemble correspondant de valeurs de consigne envoyées par le sous-système de traitement normal, NPSS, (110) au sous-système de surveillance, MSS, (120) par l'intermédiaire du sous-système de décision tolérant la faute, FTDSS, (100), et
- si les deux vérifications sont positives, mettre un indicateur de correction, indicateur de correction-1, à la valeur VRAI et, si l'une des deux vérifications est négative ou si les deux vérifications sont négatives, mettre l'indicateur de correction-1 à la valeur FAUX et envoyer l'indicateur de correction-1 ou la valeur de l'indicateur de correction-1 dans chaque tranche de temps dans un message (121) au sous-système de décision tolérant à la faute, FTDSS, (100), et dans lequel
- le sous-système décisionnel de tolérance à la faute, FTDSS, (100) décide, dans chaque tranche de temps, comme suit : dans le cas où l'indicateur de correction-1 a la valeur TRUE, l'ensemble de valeurs de consigne pour le fonctionnement normal, par exemple dans des messages (101), est transmis aux actionneurs (150), dans le cas où l'indicateur de correction-1 a la valeur FALSE ou un message (121) attendu par le FTDSS (100) avec l'indicateur de correction-1 n'est pas reçu, l'ensemble de consignes de fonctionnement anormal est transmis, par exemple dans des messages (101), aux actionneurs (150), auquel cas, à partir de ce moment, dans les tranches de temps suivantes, les consignes de fonctionnement anormal sont transmises aux actionneurs (150) jusqu'à ce que le dispositif technique atteigne un état sûr.

10. Système informatique temps réel selon la revendication 9, dans lequel le sous-système de surveillance, MSS, (120) est agencé pour vérifier, à chaque tranche de temps, si l'ensemble de valeurs de consigne pour le fonctionnement anormal qu'il reçoit du sous-système de gestion des événements critiques, CEHSS, (130) via le FTDSS (100), notamment au moyen de messages (131, 102), est compatible avec le modèle d'environnement calculé par le MSS sur la base des données de capteur du MSS et garantit une gestion sûre du processus en fonctionnement anormal, et est conçu pour, si tel est le cas, attribuer la valeur VRAI à un autre indicateur de correction, l'indicateur de correction-2, et, si ce n'est pas le cas ou si aucun ensemble de valeurs de consigne pour le fonctionnement anormal n'a été reçu du CEHSS (130) dans une tranche de temps, à fixer l'indicateur de correction-2 à la valeur FALSE, et dans lequel le sous-système de surveillance, MSS, (120) est agencé pour envoyer ensuite l'indicateur de correction-2 au sous-système de traitement normal, NPSS, (110), et dans lequel le sous-système de traitement normal, NPSS, (110) est agencé pour vérifier, dans chaque tranche de temps, si l'indicateur de correction-2 reçu du sous-système de surveillance, MSS, prend la valeur FALSE et, si c'est le cas, pour interrompre le guidage normal du dispositif technique et guider le dispositif technique vers un état sûr.

11. Système informatique temps réel selon la revendication 9 ou 10, dans lequel le sous-système de traitement normal, NPSS, (110) transmet dans chaque tranche horaire, en plus de l'ensemble de consignes pour le fonctionnement normal, une trajectoire planifiée pour le fonctionnement normal, par exemple dans le message (112) dans lequel il envoie l'ensemble de consignes pour le fonctionnement normal au sous-système de surveillance, MSS, (120).

12. Système informatique en temps réel selon l'une quelconque des revendications 9 à 11, dans lequel le serveur de temps est tolérant aux pannes.

13. Système informatique temps réel selon l'une quelconque des revendications 9 à 12, dans lequel les sous-systèmes de traitement de données (110, 120, 130) sont des sous-systèmes non sécurisés, c'est-à-dire qu'ils contiennent des logiciels complexes exécutés sur du matériel non tolérant aux pannes.

14. Système informatique temps réel selon l'une quelconque des revendications 9 à 13, dans lequel les sous-systèmes de traitement de données (110, 120, 130) contiennent un logiciel diversitaire, par exemple pour déterminer les valeurs de consigne pour les actionneurs (150) et/ou un modèle environnemental.

15. Système informatique temps réel selon l'une des revendications 9 à 14, dans lequel chacun des sous-systèmes de traitement de données (110, 120, 130) dispose de son propre ensemble de capteurs.

16. Système informatique temps réel selon l'une des revendications 9 à 15, dans lequel chacun des sous-systèmes (100, 110, 120, 130, 210) dispose de sa propre alimentation électrique.
